# EUROPÄISCHE PATENTSCHRIFT

(11) **EP 0 194 230 B1**
(45) Veröffentlichungstag und Bekanntmachung des Hinweises auf die Patenterteilung: **28.04.1993**
(21) Anmeldenummer: 86810102.3
(22) Anmeldetag: 27.02.1986
(51) Int. Cl.: B29C 67/14, B29B 11/16

(54) **Verfahren zum Herstellen eines Rohlings aus faserverstärkter Kunstharz-Formmasse**
Method for preparing a fibre-reinforced plastic moulding material
Procédé pour fabriquer des préformes à partir d'une matière plastique de moulage renforcée de fibres

(30) Priorität: 05.03.1985 DE 3507720
(43) Veröffentlichungstag der Anmeldung: 10.09.1986
(73) Patentinhaber: MATEC HOLDING AG, CH-8700 Küsnacht (CH)
(72) Erfinder: Spaay, Albert Jan, D-7518 Bretten (DE)
(74) Vertreter: Seifert, Helmut E.

(56) Entgegenhaltungen:
- DE-A- 2 105 955
- DE-A- 2 263 324
- DE-A- 2 443 117
- US-A- 4 282 049
- US-A- 4 376 749

## Beschreibung

Die Erfindung betifft ein Verfahren zum Herstellen eines Rohlings aus faserverstärkter Kunstharz-Formmasse, welcher Rohling zum Beschicken einer Formpresse geeignet ist, um daraus einen faserverstärkten Kunstharz-Gegenstand zu erzeugen.

Bei der Verarbeitung derartiger als "SMC" (Sheet Moulding Compound) bekannter Kunstharz-Formmassen zum Endprodukt, dem Kunstharz-Gegenstand, ist man bemüht, den Verarbeitungsprozess so zu gestalten, dass das Endprodukt optimale Festigkeitseigenschaften erhält. Hierzu leisten die Verstärkungsfasern, vor allem deren Orientierung im Endprodukt, einen wesentlichen Beitrag.

Als Verstärkungsfasern werden bevorzugt Monofilamente aus Glas zu Spinnrovings gebündelt, aber auch Fasern aus organischen Stoffen wie Polyester, Polyamid, Aramid od.dgl. verwendet, die direkt aus der Spinnanlage kommend oder von Vorratsrollen geliefert, in endloser Form und gemischt mit geschnittenen Fasern einer Formmassen-Anlage zugeführt werden. In derartigen Anlagen werden die Fasern in die Pressmasse aus Harzansatz und Zusatzstoffen eingebettet, vergleiche z.B. Deutsche Patentschrift Nr. 22 47 142.

Die aus der Anlage austretende SMC-Formmasse wird von Kunststoff-Folien eingeschlossen, so dass sie sich z.B. in aufgewickelter Form gut transportieren und lagern lässt. Wird die Masse nicht in Folien eingeschlossen, so lässt sie sich nur portionenweise in Behälter abfüllen, und die Weiterverarbeitung ist sehr erschwert.

Bei der in Folien eingebetteten Formmasse muss die Folie vor dem Einbringen der Masse in die Presse entfernt werden, was immer von Hand geschieht. Aus der Formmasse müssen dann verpressfähige Portionen von Hand zugeschnitten und zusammengelegt werden, um dann wieder von Hand in die Pressform eingelegt zu werden.

Der Erfindung liegt die Aufgabe zugrunde, das Herstellverfahren für die SMC-Formmasse zu verbessern, eine automatische Portionierung der Formmasse und einen automatischen Transport der portionierten Formmasse zur Presse zu ermöglichen und ausserdem die Orientierung der Verstärkungsfasern im Endprodukt günstig zu beeinflussen. Dies wird gemäss der Erfindung dadurch erreicht, dass eine für den zu pressenden Kunstharz-Gegenstand ausreichende Portion einer faserverstärkten Kunstharz-Formmasse auf einem mindestens zum überwiegenden Teil aus endlosen Rovings bestehenden und während der folgenden Arbeitsgänge bis zum Verpressen zum Kunstharz-Gegenstand als Träger für die Formmasse verwendeten Fasermattenstück abgelegt wird.

Bei dem erfindungsgemässen Verfahren dient das Fasermattenstück als Träger der sonst nicht handhabbaren Portion der Kunstharz-Formmasse und bildet mit der Formmasse den zu pressenden Rohling. Beim Pressvorgang wird das Fasermattenstück Bestandteil der Faserverstärkung des Kunstharz-Gegenstandes und verbessert dessen Festigkeitseigenschaften. Es ist auch möglich, in Folien eingeschlossene Formmasse zu verwenden, wenn die Folie wie üblich von Hand abgezogen, die Masse portioniert und auf ein Fasermattenstück als Träger aufgelegt wird.

Vorzugsweise wird zur Ausführung des erfindungsgemässen Verfahrens eine Kunstharz-Formmasse ohne Folienverpackung verwendet, die aus einem Rütteltrichter austritt, an den sich eine Portionier-Einrichtung anschliesst. Die Formmasse tritt aus der Portionier-Einrichtung in für das Pressen geeigneten Portionen aus und wird auf Fasermattenstücke abgelegt, die eine mit Fasermatten beschickte Stanzeinrichtung anliefert. Die Portionen können über entsprechende Steuer- und Programmiereinrichtungen den Anforderungen der Fertigung, d.h. den in mehreren nachgeschalteten Pressen vorhandenen unterschiedlichen Pressformen angepasst werden. Es ist dann möglich, mit einer einzigen, kontinuierlich arbeitenden Anlage und einer Mehrzahl von Pressen gleichzeitig verschiedene Endprodukte herzustellen.

Eine Anlage zur Herstellung von Rohlingen aus faserverstärkten Kunstharz-Formmassen für die automatische Beschickung von Kunstharz-Formpressen enthält vorzugsweise eine Vorrichtung zum Herstellen der Kunstharz-Formmasse, mit zwei gegeneinander drehenden Walzen, über deren Walzenspalt Zuleitungen für die Harzkomponenten, die Faserkomponenten und die Zusatzstoffe und unter deren Walzenspalt ein Rütteltrichter vorgesehen sind; eine an den Auslass des Rütteltrichters unmittelbar anschliessende Portionier-Einrichtung zum Verdichten und Portionieren der Kunstharz-Formmasse in nach Gewicht und Dichte vorgegebene Portionen; eine Stanzeinrichtung, welche aus einer aus endlosen, in einander überlappenden Schleifen abgelegten und wahlweise mit geschnittenen Glasrovings vermischten Spinnrovings bestehenden Fasermatte Teilstücke ausstanzt, die in ihrer Form der Gestalt des zu erzeugenden Kunstharz-Gegenstands angepasst sind; und eine Positioniereinrichtung, welche die Fasermattenstücke auf eine Transporteinrichtung legt, die die Fasermattenstücke zur Portioniereinrichtung und von dort mit der aufgelegten Kunstharz-Formmasse in die Pressform transportiert.

Zum Portionieren können verschiedene Einrichtungen verwendet werden, z.B. ein modifizierter Extruder mit besonders kurzem konischen Verlauf von Gehäuse und Schnecke, mit dem Ziel, die Verstärkungsfasern in der Formmasse möglichst wenig zu schädigen. Die Formmasse tritt aus dem Trichter der Herstell-Vorrichtung über einen Mischer bzw. Kneter (Schaufel-, Turbokneter bzw. Schaufelmischer) in den Extruder über. Eine Abschneidevorrichtung portioniert den austretenden Formmassen-Strang nach seiner Länge, so dass Abschnitte gleicher Länge, d.h. auch gleicher Masse, auf die angelieferten Fasermattenstücke abgelegt werden.

Vorteilhafter ist die Arbeitsweise mit einem Kolbenverdichter als Portionier-Einrichtung. Die Kunstharz-Formmasse gelangt hierbei vom Trichterausgang der Herstell-Vorrichtung in einen Verdichungszylinder (Hauptzylinder), in dem ein Verdichterkolben hin und zurück bewegbar ist. Der Zylinder hat einen zum Trichter offenen Abschnitt, der von dem Kolben in seiner einen Endstellung versperrt wird. Zum anderen Ende hin ist der Zylinder so lang, dass er die aus dem Trichter eingefüllte Formmasse in verdichtetem Zustand aufnehmen kann und steht unter Unterdruck, damit sich in der eintretenden Formmasse keine Lufteinschlüsse bilden. Das Ende des Zylinders wird von einem senkrecht zur Kolbenbewegung verschiebbaren Deckel abgeschlossen, der mit einem zweiten Zylinder derart verbunden ist, dass in der einen Stellung der Deckel den Hauptzylinder abschliesst und in der anderen Stellung der zweite Zylinder den Deckel ersetzt, so dass die Formmasse aus dem Hauptzylinder in den zweiten Zylinder übertreten kann. Der Kolben im zweiten Zylinder übt einen einstellbaren Gegendruck aus. Mit der Einstellung dieses Gegendrucks lassen sich Dichte und Füllmenge einstellen. Ist die eingestellte Füllmenge erreicht, so gleitet der zweite Zylinder nach unten, und der mit ihm verbundene Deckel schliesst den Hauptzylinder ab. Der Kolben des zweiten Zylinders stösst die im Zylinder gespeicherte Portion der Formmasse aus und legt sie auf dem Fasermattenstück ab, das von einer Positionier-Einrichtung angeliefert wurde und aus der Stanzvorrichtung der Vorrichtung zum Herstellen der Fasermatten kommt.

Der Aufbau einer Vorrichtung zum Herstellen der Fasermatten entspricht den an sich bekannten Ausführungen. Auf einem endlosen Transportband werden mittels einer seitliche Bewegungen quer zur Laufrichtung des Transportbandes ausführenden pneumatischen Verteileinrichtung endlose Spinnrovings in einander überlappenden Schlingen abgelegt. Günstig ist es, mindestens sechs Verteilungsstellen auf 1,5 Meter Breite anzuordnen und über Sprüheinrichtungen Bindemittel zuzugeben. Die Rovings bestehen vorzugsweise aus mineralischem Material, beispielsweise Glas, geschmolzenem Basalt oder vulkanischem Tuff und/oder aus organischem Material, beispielsweise Polyester, Polyamid, Aramid und dergleichen. Falls erwünscht, können auch zusätzlich endlose unidirektionale, d.h. parallel in Laufrichtung des Transportbandes liegende Rovings, oder geschnittene Rovings über zusätzliche Aufgabestellen abgelegt werden. Eine im Hinblick auf den Faserverlauf und die Festigkeitseigenschaften des Endprodukts optimale Fasermatte wird erhalten, wenn bei ihrer Herstellung zwei oder drei Verteilanlagen in Richtung des Transportbandes hintereinander angeordnet sind, so dass in der ersten Verteileinrichtung Spinnrovings mit der Feinheit 50 bis 60 Tex und in den weiteren Verteilanlagen von 100 bis 200 Tex bzw. 200 bis 400 Tex abgelegt werden.

Die Stanzeinrichtung, der die Fasermatte zugeführt wird, kann verschiedene auswechselbare Stanzwerkzeuge aufnehmen, so dass Fasermattenstücke entstehen, die jeweils in ihrer Kontur dem zu pressenden Endprodukt angepasst sind.

Die zur Durchführung des Arbeitsverfahrens der Erfindung erforderlichen Anlagenteile lassen sich optimal für einen durchlaufenden Dauerbetrieb einsetzen. Hierzu ist nur eine einzige, kontinuierlich arbeitende automatische Spinnvorrichtung für Spinnrovings erforderlich, die beispielsweise während der normalen Arbeitszeit in zwei Schichten von je 8 Stunden die Faserverstärkung für die Kunstharz-Formmassen und ausserhalb der normalen Arbeitszeit die Faserverstärkung für die harzgebundene Fasermatte erzeugt. Spinnvorrichtungen müssen bekanntlich im Dauerbetrieb arbeiten, da das Anfahren der Oefen und Spinneinrichtungen sehr aufwendig ist. Die Spinnvorrichtung wird so installiert, dass sie wahlweise mit der Vorrichtung zum Herstellen der Formmasse und auch mit der zum Herstellen der Fasermatten zusammenarbeiten kann. Hierzu können entweder die Ausgangsteile der Spinnvorrichtung oder die Anfangsteile der Vorrichtungen zum Herstellen der Pressmasse und der Fasermatten seitlich verschiebbar bzw. schwenkbar und entsprechend nebeneinander aufgestellt werden.

Die Produktion kann dann z.B. in der Weise laufen, dass bei einem 24-Stunden-Betrieb während 16 Stunden der Tageszeit die Spinnvorrichtung mit der Vorrichtung zum Herstellen der Formmasse zusammenarbeitet und Kunstharz-Formmasse erzeugt wird, während in den 8 Stunden der Nachtzeit Fasermatten hergestellt werden und die Spinnanlage mit der Vorrichtung zum Herstellen der Fasermatte zusammenarbeitet. Die Fasermatten bzw. die daraus hergestellten Fasermattenstücke werden im Vorrat produziert und an der Positionier-Einrichtung gestapelt. Wenn dann während der nachfolgenden Arbeitsperiode die Vorrichtung zum Herstellen der Formmasse mit der Spinnvorrichtung zusammenarbeitet, werden, wie beschrieben, die Fasermattenstücke aus dem Vorrat zur Portionier-Einrichtung und von dort zu den Pressen befördert. Voraussetzung hierzu ist natürlich, dass zunächst beim Anlaufen des Dauerbetriebs die Spinnvorrichtung mit der Vorrichtung zum Herstellen der Fasermatte zusammenarbeitet. Natürlich können auch Pausen eingelegt, und die auf Fasermattenstücke abgelegten Portionen der Formmasse können einige Zeit gelagert werden, wenn dies gewünscht und aus betrieblichen Gründen einmal erforderlich ist, allerdings dann zwischen PE-Folien, weil sonst nach längerer Lagerung Styrolverlust auftritt. Grundsätzlich ist es aber möglich, im Dauerbetrieb über Tage und Wochen zu fahren und so eine jeweils nach dem Endprodukt bemessene Anzahl von Pressen kontinuierlich auszulasten. Bei einem solchen Dauerbetrieb und der damit verbundenen Verarbeitung der feuchten, direkt aus der Formmassen-Anlage austretenden Kunstharz-Formmasse ergibt sich noch der Vorteil, dass in den Pressen mit geringen Pressdrücken gearbeitet werden kann, so dass es möglich ist, mit beheizten Presswerkzeugen aus Aluminium, Zamak, Zinklegierungen oder in der Galvano-Technik hergestellten Presswerkzeugen zu arbeiten.

Hierbei können sogar Presswerkzeuge mit sogenannten schwimmenden Verschlusskanten anstelle der sonst üblichen teuren Werkzeuge mit Tauchkanten Verwendung finden.

Ein Ausführungsbeispiel mit allen für einen vollautomatischen Ablauf notwendigen Anlageteilen und -Einrichtungen soll anhand der Zeichnung noch kurz erläutert werden. Es zeigen:
- Fig. 1: in schematischer Darstellung eine Spinnvorrichtung, kombiniert mit einer Vorrichtung zum Herstellen von Rovings und von Formmasse,
- Fig. 2: eine Portionier-Einrichtung nach Art eines Kolbenverdichters,
- Fig. 3: die gleiche Spinnvorrichtung wie in Fig. 1 in Zusammenarbeit mit einer Vorrichtung zum Herstellen einer Fasermatte,
- Fig. 4: eine Aufsicht auf einen Teil der Anlage nach Fig. 3,
- Fig. 5: schliesslich die Stanzeinrichtung für die Fasermattenstücke und den Transport der Fasermattenstücke zur Positionier-Einrichtung.

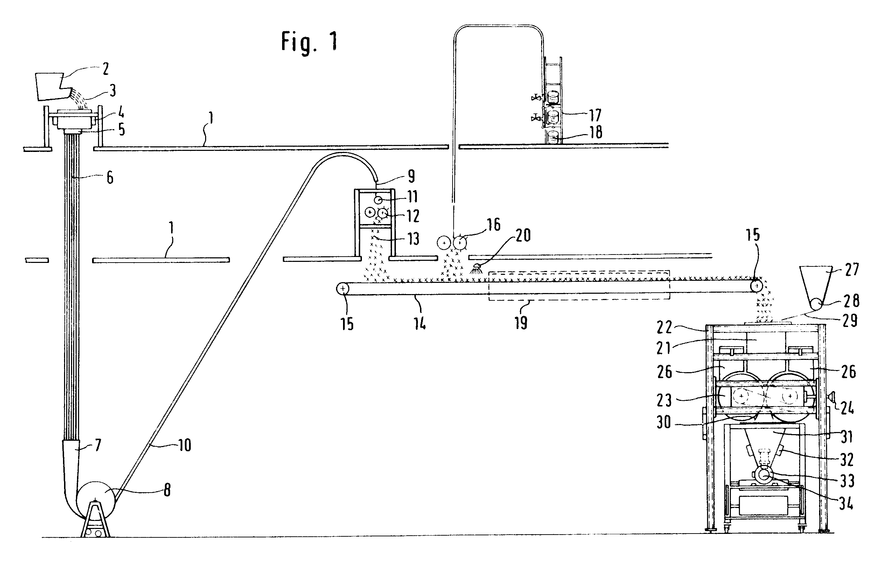

In Fig. 1 ist links eine Spinnvorrichtung bekannter Ausführung dargestellt, die sich teils oberhalb, teils unterhalb eines Zwischenbodens 1 erstreckt. Bei 2 werden die glasbildenden Grundstoffe eingegeben und vermischt. Sie treten bei 3 in den Glasschmelzofen 4 ein. Das hier erschmolzene Glas tritt aus der Spinndüsenplatte 5 in Monofilamenten 6 aus und gelangt in den Spinntrichter 7. In der Spinnradtrommel 8 mit Spinnrad werden Roving-Spinnstrands 9 gebildet und über pneumatische Fordereinrichtungen 10 entlang einer Schlichtevorrichtung 11 geführt, worin die endlosen Spinnstrands mit Chemikalien geschlichtet und weiter direkt einer Schneidvorrichtung 12 zugeführt werden. Die geschnittenen Spinnrovings 13 fallen auf ein endloses Transportband 14 mit Umlenk- und Antriebsrollen 15. Mit 16 ist eine weitere Schneidvorrichtung für solche Glasrovings angedeutet, die von einem Rovinggatter 17 mit Rovingspulen 18 abgespult werden. Die bei 16 geschnittenen Rovings können andere Texzahlen haben als die Spinnrovings 9. Es kann mit beiden Schneidvorrichtungen 12 und 16 gearbeitet werden oder allein mit der Schneidvorrichtung 16, wenn die Spinnanlage ausser Betrieb ist. Die aufgebrachten geschnittenen Spinnrovings 9 und/oder Rovings 16 werden vor einer Trockeneinrichtung 19 mit Bindemittel, z.B. P.V.A. Dispersion, bei 20 besprüht und anschliessend getrocknet und der Eingabewanne 21 der eigentlichen Vorrichtung zum Herstellen der Formmasse 22 zugeführt. Diese enthält zwei Walzen 23, die sich gegeneinander drehen. Der Walzenspalt ist dadurch verstellbar, dass die rechte Walze über eine Stelleinrichtung 24 in horizontaler Richtung verschoben werden kann. Ueber den äusseren Hälften der Walzen 23 stehen die Rakelwannen 26, in die über nicht dargestellte Rohrleitungen der Harzansatz in viskosem, pumpfähigem Zustand eingetragen wird.

Mittels eines Aufgabetrichters 27 mit Aufgabewalze 28 und Leitblech 29 werden Zusatzstoffe und Füllstoffe, z.B. Split, Quarzsand, Glasperlen der Wanne 21 zugeführt. Hiermit wird die Viskosität des Harzansatzes erhöht. Bestimmte Zusatzstoffe, z.B. Al₂(OH)₃ und/oder SiO₂, verbessern auch die chemische Beständigkeit, die Flammwidrigkeit und die Abriebfestigkeit des Endprodukts. Ueber den Walzenspalt werden die aufgegebenen Materialien, Fasern und Zusatzstoffe mit dem Harzansatz durchtränkt. Die Masse wird mittels Abschaber 30 von den Walzen abgelöst und fällt in den federnd angeordneten Trichter 31, der über verschiedene Ultraschall-Vibratoren 32 in Schwingungen versetzt wird. Dadurch wird die Masse im unteren Teil des Trichters verdichtet und tritt hier in die Portionier-Einrichtung 33 über. Diese kann - wie bereits erwähnt - aus einem Extruder mit modifiziertem kurzen konusförmigen Verlauf von Gehäuse und Schnecke bestehen. Am Ausgang ist dann eine Abschneide-Vorrichtung angebracht, die Formmassen-Stränge einstellbarer Länge portioniert 34.

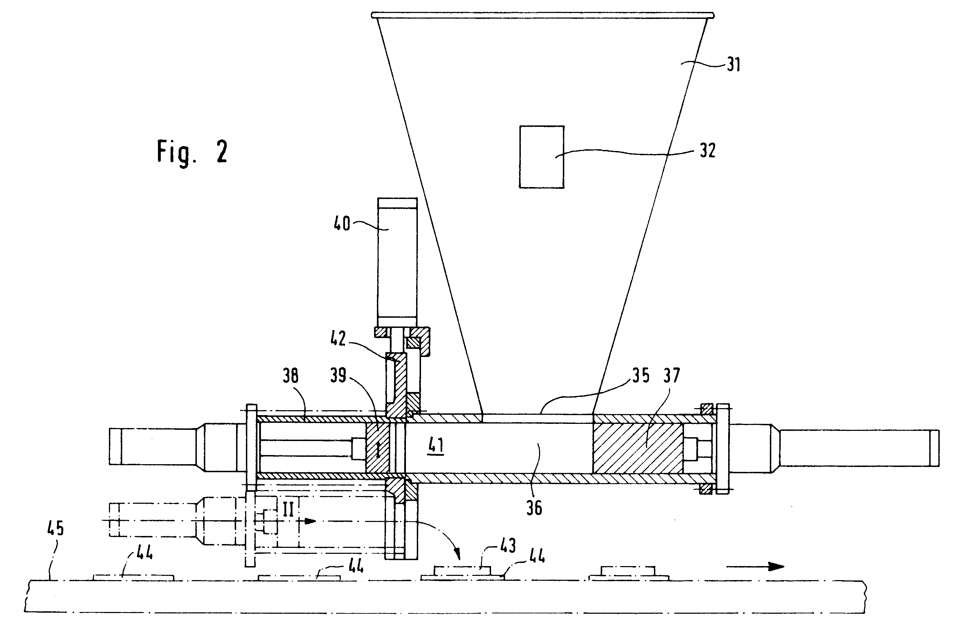

Nach dem Ausführungsbeispiel der Fig. 2 dient als Portionier-Einrichtung ein Kolbenverdichter. Dieser hat einen Hauptzylinder 36, dessen Zylinderwand an das untere Ende des federnd aufgehängten Trichters 31 der Vorrichtung zum Herstellen der Formmasse anschliesst und hier eine Oeffnung 35 besitzt. Der im Hauptzylinder 36 gleitende Kolben 37 ist so lang, dass er die Oeffnung 35 verschliesst, wenn er nach links bewegt wird. An das linke Ende des Hauptzylinders 36 schliesst ein weiterer Zylinder 38 an, in dem ein Kolben 39 mit einer z.B. hydraulisch einstellbaren Kraft nach rechts drückt. Der Zylinder 38 ist über einen Antrieb 40 nach unten in die gestrichelt eingezeichnete Stellung verschiebbar, und an seinem rechten Ende ist oben ein Verschlussdeckel 42 für den Hauptzylinder befestigt, so dass dieser Deckel den Hauptzylinder am Ende seines linken Abschnitts 41 verschliesst, wenn der Zylinder 38 unten in der gestrichelt gezeichneten Stellung steht.

Das Portionieren läuft nun in der Weise ab, dass der Kolben 37 in periodischen Abständen nach links bewegt wird und die aus dem Trichter 31 eintretende Kunstharz-Formmasse nach links in den Teil 41 des Zylinders 36 verschiebt und diese dabei verdichtet und entlüftet wird. Nach mehreren Kolbenhüben tritt die Masse in den zweiten Zylinder 38 unter Gegendruck über. Der Kolben 39 weicht entsprechend der eingestellten Gegenkraft nach links aus, und nach Erreichen eines vorher eingestellten Kolbenwegs des Kolbens 39 wird über einen entsprechenden elektronischen Geber die Verschiebe-Bewegung ausgelöst: Der Antrieb 40 verschiebt den Zylinder 38 nach unten, der Deckel 42 verschliesst den Zylinder 36 und die im Zylinder 38 angesammelte Portion 43 der Kunstharz-Formmasse, die nach Dichte und Masse dem voreingestellten Wert entspricht, wird ausgeworfen. Sie fällt auf ein Fasermattenstück 44, das auf einem Transportband 45 herangeführt wurde. Das Transportband wird von einer Positionier-Einrichtung taktweise so gesteuert, dass immer ein Fasermattenstück 44 an der Auswurfposition des Zylinders 38 steht. Das Transportband führt die Kunstharz-Formmassen-Portionen mit dem Fasermattenstück als Unterlage zu den Formpressen. Die Kontur der Formmassen-Portionen kann z.B. dadurch der Pressform angepasst werden, dass der Querschnitt des Zylinders 38 von der Kreisform abweicht.

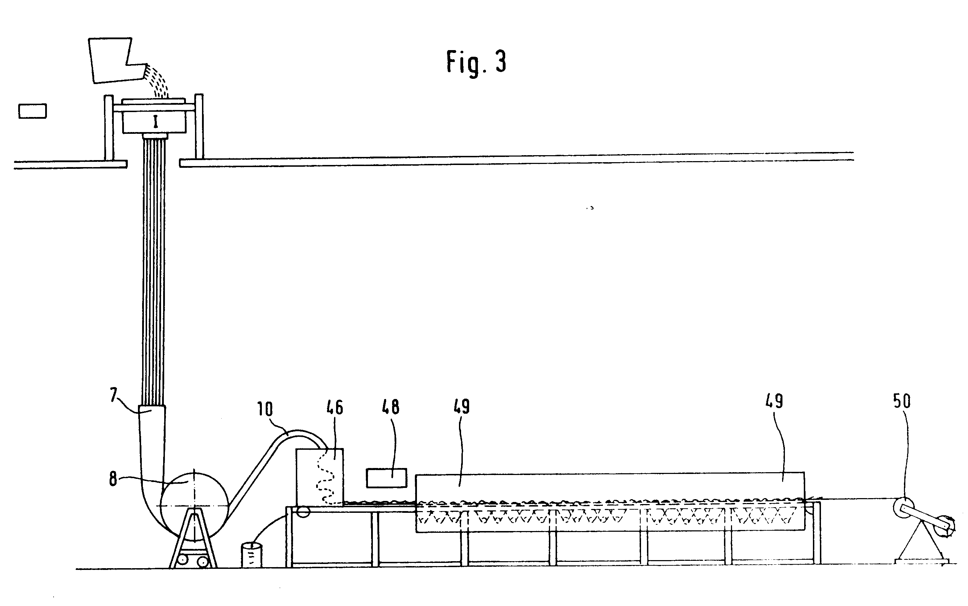

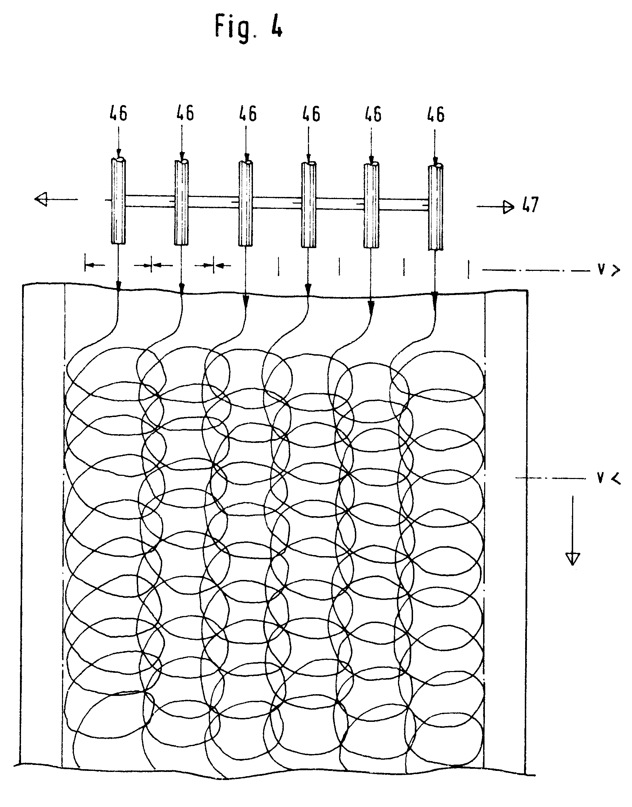

Die Fig. 3 und 4 zeigen sehr schematisch die Arbeitsweise einer Vorrichtung zum Herstellen von Fasermatten. Im linken Teil der Fig. 3 befindet sich die anhand der Fig. 1 bereits erläuterte Spinnvorrichtung. Die austretenden Spinnrovings werden in pneumatische Verteilstationen 46 befördert, deren Arbeitsweise aus Fig. 4 erkennbar ist.

Sechs Verteilstationen 46, die über einen gemeinsamen Antrieb 47 seitlich bewegt werden, legen die Spinnrovings in überlappenden Schlingen auf dem Transportband der Anlage ab. Mit einer Sprüheinrichtung 48 werden Bindemittel, z.B. P.V.A. Disperionen, aufgebracht, welche die Fasern an den Kreuzungsstellen miteinander verkleben. Zusätzlich können entsprechend der Darstellung nach Fig. 1 auch noch geschnittene Rovings über entsprechende Aufgabevorrichtungen aufgeflockt werden. Die Dichte der Fasern auf dem Transportband kann über die Laufgeschwindigkeit des Bandes variiert werden. Auf einem langsam laufenden Band werden mehr Fasern je Flächeneinheit abgelegt.

Eine Fasermatte mit besonders günstigem Einfluss auf das Endprodukt wird erhalten, wenn - wie bereits erwähnt - mehrere pneumatische Verteilstationen 46 in Bewegungsrichtung des Transportbandes hintereinander angeordnet sind, die mit Spinnrovings beschickt werden. Es werden dann von der ersten Verteilstation Spinnrovings, z.B. von 50 bis 60 Tex (Gewicht in Gramm je 1'000 m Faserlänge) abgelegt und in den folgenden Verteilstationen Spinnrovings mit 100 bis 400 Tex. Da die zuerst abgelegten Spinnrovings die unterste Schicht der Fasermatte bilden, das Fasermattenstück in die Pressform gelangt und die unterste Schicht bei bestimmten Kunstharz-Gegenständen in der Aussenschicht sichtbar ist, kann mit dieser Verfahrensweise eine günstige optische Gestaltung der Oberfläche des Endprodukts erreicht werden.

Wie in Fig. 3 angedeutet, durchlaufen die aufgegebenen Bestandteile einen Trockenofen 49, treten aus diesem als relativ stabile Fasermatte aus und werden zu einer Stapelrolle 50 aufgewickelt.

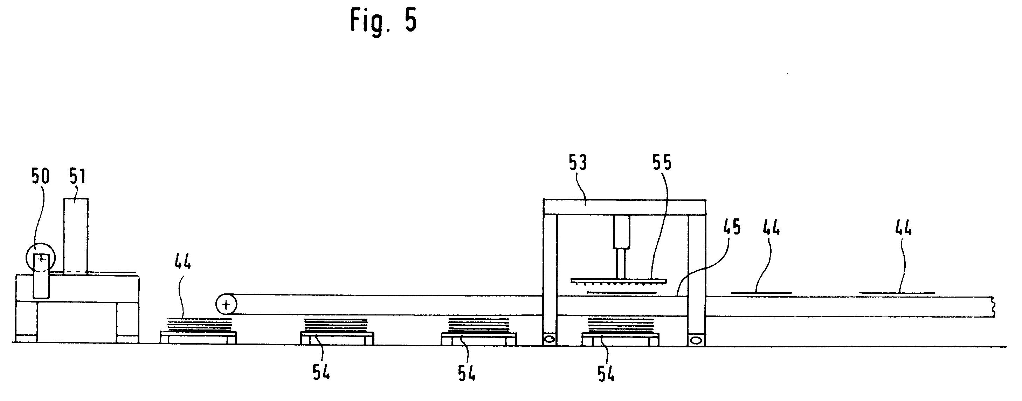

In Fig. 5 ist die Stanzeinrichtung mit Stapeleinrichtung und Positionier-Einrichtung schematisch dargestellt. Die Fasermatten-Rolle 50 wird der Stanze 51 zugeführt, welche die Fasermattenstücke 44 auswirft und stapelt. Wie schon erwähnt, kann mit entsprechender Ausbildung des Stanzwerkzeugs das erhaltene Fasermattenstück der Form des Endprodukts angepasst werden. Die Positionier-Einrichtung 53 für die Fasermattenstücke fährt entlang der Paletten mit Fasermattenstücken 54 und nimmt jedes Mal das erforderliche Fasermattenstück mit Hilfe eines Krallentellers 55 vom Stapel und legt es auf dem Transportband 45 ab. Die Fasermattenstücke werden dann hintereinander der Portionier-Einrichtung (Fig. 2) für die Kunstharz-Formmasse zugeführt.

Bei einer beispielsweisen Ausführung des erfindungsgemässen Verfahrens wurden auf Zug und Biegung belastbare Platten hergestellt. Dazu wurden in bekannter Weise etwa 30 µ dicke Glasfasern gesponnen, in einer Spinnradtrommel parallel zu Rovings zusammengefasst und danach chemisch geschlichtet. Die Rovings wurden in eine Mattenlegevorrichtung gefördert, die ein Transportband und eine Mehrzahl quer zur Transportrichtung des Bands verschiebbare Rovingverteilstationen enthielt. Die zu einer etwa 1 cm dicken Matte gelegten Rovings wurden dann mit einer als Klebmittel wirkenden Dispersion von Polyvinylalkohol besprüht. Nach dem Durchlaufen eines Trockenofens wurde die Matte in quadratische Stücke von 10 cm Seitenlänge geschnitten, und die Stücke wurden gestapelt.

Zum Herstellen der Pressmasse wurden ungesättigte Polyesterharze und in Styrol gelöstes Polyvinylacetat im Verhältnis von etwa 60:40 G% mit etwa 1,5 G% Polymerisationskatalysator, z.B. tertiäres Butylperbenzoat intensiv gemischt und danach in eine Dosiereinrichtung gegeben. Die Abgabeöffnung der Dosiereinrichtung war über einem Transportband angeordnet, das die aus der Matte geschnittenen quadratischen Stücke mit vorgegebenem Abstand voneinander vom Vorratsstapel zur Formpresse transportierte. Im Bereich des Transportbands war eine Lichtschranke angeordnet, die ein Steuersignal erzeugte, wenn ein Mattenstück unter die Abgabeöffnung der Dosiereinrichtung transportiert wurde. Das Steuersignal aktivierte die Dosiereinrichtung, so dass auf jedes der unter die Einrichtung transportierten Mattenstücke eine voreingestellte Menge von 250 g der Pressmasse abgelagert wurde. Die knetbare Pressmasse blieb während des weiteren Transports zur Formpresse auf dem Mattenstück liegen, ohne in dieses einzufliessen, weshalb die auf dem Transportband aufliegende Fläche des Mattenstücks zu keinem Zeitpunkt klebrig war und der aus Mattenstück und Pressmasse bestehende Rohling unbehindert vom Transportband in die Formpresse eingeschoben oder an einem Zwischenlagerplatz abgelegt werden konnte.

In der Formpresse wurde der Rohling bei einer Temperatur von etwa 140°C und mit einem Druck von etwa 50 kpd/cm² gepresst und konnte nach etwa 2 ½ min als gehärtete quadratische Platte mit 12 cm Seitenlänge und 1 cm Dicke aus der Presse entnommen werden.

## Patentansprüche

1. Verfahren zum Herstellen eines Rohlings aus faserverstärkter Kunstharz-Formmasse, welcher Rohling zum Beschicken einer Formpresse geeignet ist, um daraus einen faserverstärkten Kunstharz-Gegenstand zu erzeugen, dadurch gekennzeichnet, dass eine für den zu pressenden Kunstharz-Gegenstand ausreichende Portion einer faserverstärkten Kunstharz-Formmasse auf einem mindestens zum überwiegenden Teil aus endlosen Rovings bestehenden und während der folgenden Arbeitsgänge bis zum Verpressen zum Kunstharz-Gegenstand als Träger für die Formmasse verwendeten Fasermattenstück (44) abgelegt wird.

2. Verfahren nach Anspruch 1, dadurch gekennzeichnet, dass die in einer automatisch arbeitenden Vorrichtung erzeugte faserverstärkte Kunstharz-Formmasse mittels einer Portionier-Einrichtung (33) auf ein aus einer mit einer Fasermatte beschickten Stanzeinrichtung angelieferten Fasermattenstück (44) abgelegt wird.

3. Verfahren nach Anspruch 2, dadurch gekennzeichnet, dass die Kontur des Fasermattenstücks (44) und der darauf abgelegten faserverstärkten Kunstharz-Formmasse der Pressform angepasst sind.

4. Verfahren nach Anspruch 2, dadurch gekennzeichnet, dass zum Herstellen der Fasermatte endlose Spinnrovings mittels seitliche Bewegungen quer zur Laufrichtung eines Transportbands ausführenden pneumatischen Verteileinrichtungen (46) in einander überlappenden Schlingen abgelegt und in bekannter Weise über Sprüheinrichtungen (48) Bindemittel und wahlweise geschnittene Rovings zugegeben werden.

5. Verfahren nach Anspruch 4, dadurch gekennzeichnet, dass aus drei in der Laufrichtung des Transportbandes hintereinander angeordneten Verteileinrichtungen (46) zuerst Spinnrovings der Feinheit 50 bis 60 Tex, danach solche von 100 bis 200 Tex und zuletzt solche von 200 bis 400 Tex abgelegt werden.

6. Verfahren nach Anspruch 1, dadurch gekennzeichnet, dass eine faserverstärkte Kunstharz-Formmasse enthaltend pumpfähige Harzkomponenten, geschnittene mineralische Fasern sowie Füll- und Zusatzstoffe verwendet wird.

7. Anlage zur Ausführung des Verfahrens nach Anspruch 1, gekennzeichnet durch:
eine Vorrichtung zum Herstellen der Kunstharz-Formmasse, mit zwei gegeneinander drehenden Walzen (23) über deren Walzenspalt Zuleitungen (27,28,29) für die Harzkomponenten, die Faserkomponenten und die Zusatzstoffe und unter deren Walzenspalt ein Rütteltrichter (31) vorgesehen sind;
eine an den Auslass des Rütteltrichters (31) unmittelbar anschliessende Portionier-Einrichtung (33) zum Verdichten und Portionieren der Kunstharz-Formmasse in nach Gewicht und Dichte vorgegebene Portionen;
eine Stanzeinrichtung, welche aus einer aus endlosen, in einander überlappenden Schleifen abgelegten und wahlweise mit geschnittenen Glasrovings vermischten Spinnrovings bestehenden Fasermatte Teilstücke (44) ausstanzt, die in ihrer Form der Gestalt des zu erzeugenden Kunstharz-Gegenstands angepasst sind; und
eine Positioniereinrichtung (53, welche die Fasermattenstücke (44) auf eine Transporteinrichtung legt, die die Fasermattenstücke zur Portioniereinrichtung (33) und von dort mit der aufgelegten Kunstharz-Formmasse in die Pressform transportiert.

8. Anlage nach Anspruch 7 dadurch gekennzeichnet, dass die Portioniereinrichtung (33) einen Verdichtungszylinder (36) aufweist mit einem hin und her bewegbaren Verdichtungskolben (37), sowie mit einem zum Rütteltrichter (31) offenen Abschnitt, der von dem Kolben (37) verschliessbar ist, und mit einem etwa gleich langen Abschnitt, in dem der Kolben (37) die aus dem Rütteltrichter (31) eingefüllte Formmasse verdichtet, sowie einem anschliessenden, die verdichtete Formmasse aufnehmenden, nach unten verschiebbaren Portionier- und Abgabezylinder (38) mit einem Gegendruckkolben (39), welcher letztere Zylinder (38) nach dem Einpressen von Formmasse nach unten verschiebbar ist und dabei mittels eines seitlich angesetzten Verschlussstückes den Hauptzylinder (36) verschliesst und welcher Gegendruckkolben (39) zum Bestimmen der Menge der in den Portionier- und Abgabezylinder (38) einpressbaren Formmasse und zum Auspressen dieser Masse auf das Fasermattenstück (44) vorgesehen ist.

9. Anlage nach Anspruch 8, gekennzeichnet durch eine kontinuierlich arbeitende automatische Spinnanlage mit seitlich verschwenkbaren bzw. seitlich verschobenen Förder- oder Führungseinrichtungen zum Einführen der Spinnstrands (9) in ein Schlichte- und Schneidegerät (12) der Vorrichtung zum Herstellen der Formmasse oder zur Ablage auf das Transportband (45) der Fasermatten-Anlage.

10. Betriebsverfahren für eine Anlage nach dem Anspruch 7, dadurch gekennzeichnet, dass zum Herstellen der Rovings für die Faserverstärkung der Kunstharz-Formmasse und für die harzgebundene Fasermatte die gleiche kontinuierlich arbeitende automatische Spinnanlage verwendet wird, derart, dass während eines Teils der Arbeitszeit die Rovings für die Kunstharz-Formmassen und während eines anderen Teils der Arbeitszeit die Rovings für die harzgebundene Fasermatte erzeugt werden.

## Claims

1. Method for the manufacture of a blank from fibre-reinforced synthetic-resin moulding material, which blank is suitable for charging a moulding press, in order to generate therefrom a fibre-reinforced synthetic-resin object, characterized in that a portion of a fibre-reinforced synthetic-resin moulding material sufficient for the synthetic-resin object to be pressed is deposited on a fibre-mat piece (44) consisting at least predominantly of endless rovings and used during the subsequent operating cycles until pressing into the synthetic-resin object as carrier for the moulding material.

2. Method according to claim 1, characterized in that the fibre-reinforced synthetic-resin moulding material generated in a device operating automatically is deposited by means of a portioning device (33) on to a fibre-mat piece (44) supplied from a punching device charged with a fibre mat.

3. Method according to claim 2, characterized in that the contours of the fibre-mat piece (44) and the fibre-reinforced synthetic-resin moulding material deposited thereon are adapted to the pressing mould.

4. Method according to claim 2, characterized in that, for the manufacture of the fibre mat, endless spun rovings by means of pneumatic distributing devices (46), carrying out lateral movements transversely to the running direction of a conveyor belt, are deposited into loops overlapping one another, and in known manner binding means and alternatively cut rovings are added by way of spraying devices (48).

5. Method according to claim 4, characterized in that of three distributing devices (46) arranged behind one another in the running direction of the conveyor belt, first of all spun rovings of the fineness 50 to 60 tex are deposited, thereafter those of 100 to 200 tex, and finally those of 200 to 400 tex.

6. Method according to claim 1, characterized in that a fibre-reinforced synthetic-resin moulding material comprising pumpable resin components, cut mineral fibres and filling materials and additives is used.

7. Installation for carrying out the method according to claim 1, characterized by:
a device for the manufacture of the synthetic-resin moulding material, having two rollers (23) rotating in the opposite direction to one another, over whose roll aperture supply lines (27, 28, 29) for the resin components, the fibre components and the additives are provided and under whose roll aperture a vibrating funnel (31) is provided;
a portioning device (33) directly connected to the outlet of the vibrating funnel (31) for compressing and portioning the synthetic-resin moulding material into portions specified according to weight and density; a punching device which punches portions (44) out of a fibre mat consisting of endless spun rovings deposited in loops overlapping one another and alternatively mixed with cut glass rovings, which portions are adapted in their shape to the form of the synthetic-resin object to be produced; and
a positioning device (53) which places the fibre-mat pieces (44) on to a conveyor device which conveys the fibre-mat pieces to the portioning device (33) and from there with the applied synthetic-resin moulding material into the pressing mould.

8. Installation according to claim 7, characterized in that the portioning device (33) has a compression cylinder (36) having a compressor piston (37) which can be moved to and fro, and having a section open towards the vibrating funnel (31), which section can be closed by the piston (37), and with an approximately equally long section in which the piston (37) compresses the moulding material filled from the vibrating funnel (31), and a connecting portioning and delivery cylinder (38), which receives the compressed moulding material and can be displaced downwards, with a counter-pressure piston (39), the latter cylinder (38), after the pressing-in of moulding material, being capable of being displaced downwards and in the process closing the main cylinder (36) by means of a laterally joined closure piece and which counter-pressure piston (39) is provided for determining the quantity of the moulding material which can be pressed into the portioning and delivery cylinder (38) and for pressing this material on to the fibre-mat piece (44).

9. Installation according to claim 8, characterized by a continually operating automatic spinning installation with laterally pivotal or laterally displaced conveying or guiding devices for the insertion of the spun strand into a sizing and cutting apparatus (12) of the device for the manufacture of the moulding material or for the depositing on to the conveyor belt (45) of the fibre-mat installation.

10. Operational method for an installation according to claim 7, characterized in that to manufacture the rovings for the fibre reinforcement of the synthetic-resin moulding material and for the resin-bonded fibre mat, the same continuously operating automatic spinning installation is used in such a way that during one part of the operating period the rovings for the synthetic-resin moulding materials are produced and during another part of the operating period the rovings for the resin-bonded fibre mat are produced.

## Revendications

1. Procédé de fabrication d'une ébauche en une matière moulable de résine synthétique armée de fibres, cette ébauche étant destinée à alimenter une presse de moulage en vue d'en fabriquer un objet en résine synthétique armée de fibres, caractérisé en ce qu'une portion de matière moulable de résine synthétique armée de fibres, suffisante pour l'objet en résine synthétique devant être moulé par compression, est déposée sur un élément d'un mat de fibres (44) constitué au moins en majeure partie de mèches sans fin, et utilisé en guise de support pour la matière de moulage au cours des opérations de travail suivantes, jusqu'à la compression pour former l'objet en résine synthétique.

2. Procédé selon la revendication 1, caractérisé en ce que la matière moulable de résine synthétique armée de fibres produite dans un dispositif fonctionnant de manière automatique, est déposée au moyen d'un dispositif de fractionnement (33), sur un élément de mat de fibres (44) fourni par un dispositif de coupe qui reçoit un mat de fibres.

3. Procédé selon la revendication 2, caractérisé en ce que le contour de l'élément de mat de fibres (44) et celui de la matière moulable de résine synthétique armée de fibres qui y est déposée, sont adaptés au moule de compression.

4. Procédé selon la revendication 2, caractérisé en ce que pour la fabrication du mat de fibres, des mèches de filage sans fin sont déposées selon des boucles qui se chevauchent les unes les autres, au moyen de dispositifs de distribution pneumatiques (46) effectuant des mouvements latéraux transversalement à la direction de déplacement d'une bande de transport, et en ce que de manière connue on ajoute au moyen de dispositifs de pulvérisation (48) du liant et, le cas échéant, des mèches coupées.

5. Procédé selon la revendication 4, caractérisé en ce qu'à partir de trois dispositifs de distribution (46) disposés l'un derrière l'autre dans la direction de déplacement de la bande de transport, on dépose tout d'abord des mèches de filage d'une finesse de 50 à 60 tex, ensuite de telles mèches de 100 à 200 tex et en dernier lieu de telles mèches de 200 à 400 tex.

6. Procédé selon la revendication 1, caractérisé en ce que l'on utilise une matière moulable de résine synthétique armée de libres renfermant des composants de résine susceptibles d'être pompés, des fibres minérales coupées, ainsi que des matériaux de charge et des additifs.

7. Installation pour la mise en oeuvre du procédé selon la revendication 1, caractérisée par:
un dispositif pour la fabrication de la matière moulable de résine synthétique, comportant deux cylindres (23) tournant dans des sens opposés, au-dessus de l'interstice desquels sont prévues des conduites d'amenée (27, 28, 29) des composants de résine, des composants de fibres et des additifs, et sous l'interstice desquels est prévue une trémie vibrante (31) ;
un dispositif de fractionnement (33) se raccordant directement à la sortie de la trémie vibrante (31), et destiné à comprimer et à fractionner la matière moulable de résine synthétique selon des portions d'un poids et d'une densité prédéterminés;
un dispositif de coupe qui découpe dans un mat de fibres constitué de mèches de filage sans fin déposées selon des boucles qui se chevauchent les unes les autres et auxquelles sont mélangées, le cas échéant, des mèches de fibres de verre coupées, des éléments (44) dont la forme est adaptée à la configuration de l'objet en résine synthétique devant être produit ; et
un dispositif de positionnement (53) qui dépose les éléments de mat de fibres (44) sur un dispositif de transport, qui transporte les éléments de mat de fibres jusqu'au dispositif de fractionnement (33), et de là, une fois la matière moulable de résine synthétique déposée, jusque dans le moule de compression.

8. Installation selon la revendication 7, caractérisée en ce que le dispositif de fractionnement (33) comprend un cylindre de compression (36) comportant un piston de compression (37) mobile selon un mouvement alternatif, ainsi qu'une partie ouverte vers la trémie vibrante (31) et susceptible d'être obturée par le piston (37), et une partie d'une longueur à peu près égale dans laquelle le piston (37) comprime la matière moulable amenée depuis la trémie vibrante (31), l'ensemble comprenant également à la suite, un cylindre de fractionnement et d'évacuation (38) pouvant coulisser vers le bas, recevant la matière moulable comprimée et comportant un piston de contre-pression (39), ce dernier cylindre (38), après l'injection sous pression de matière moulable, pouvant coulisser vers la bas en obturant à cette occasion le cylindre principal (36) au moyen d'une pièce de fermeture rapportée latéralement, et ledit piston de contre-pression (39) étant prévu pour déterminer la quantité de la matière moulable à injecter sous pression dans le cylindre de fractionnement et d'évacuation (38), et pour éjecter cette matière sur l'élément de mat de fibres (44).

9. Installation selon la revendication 8, caractérisée par une installation de filage automatique fonctionnant en continu et comportant des dispositifs de transport ou de guidage pouvant pivoter latéralement ou décalés latéralement, pour introduire des torons filés (9) dans un appareil d'encollage et de coupe (12) du dispositif de fabrication de la matière moulable, ou bien pour les déposer sur la bande de transport (45) de l'installation de production du mat de fibres.

10. Procédé d'exploitation d'une installation selon la revendication 7, caractérisée en ce que pour la fabrication des mèches destinées à l'armature de fibres de la matière moulable de résine synthétique et au mat de fibres lié à la résine, on utilise la même installation de filage automatique fonctionnant en continu, de manière à produire pendant une partie du temps de travail, les mèches destinées à la matière moulable de résine synthétique, et pendant une autre partie du temps de travail, les mèches pour le mat de fibres lié à la résine.
